Europäisches Patentamt

European Patent Office

Office européen des brevets

(11) Numéro de publication : **0 093 625**
**B1**

(12)                    # FASCICULE DE BREVET EUROPÉEN

(45) Date de publication du fascicule du brevet :
**11.12.85**

(51) Int. Cl.⁴ : **B 60 G 11/20, F 16 F 1/48**

(21) Numéro de dépôt : **83400550.6**

(22) Date de dépôt : **16.03.83**

(54) **Palier élastique travaillant en torsion.**

(30) Priorité : 05.05.82 FR 8207797

(43) Date de publication de la demande :
**09.11.83 Bulletin 83/45**

(45) Mention de la délivrance du brevet :
**11.12.85 Bulletin 85/50**

(84) Etats contractants désignés :
**DE GB IT**

(56) Documents cités :
**DE-A- 2 160 022
FR-A- 2 342 425
US-A- 1 794 782**

(73) Titulaire : **AUTOMOBILES PEUGEOT
75, avenue de la Grande Armée
F-75116 Paris (FR)**

**AUTOMOBILES CITROEN
62 Boulevard Victor-Hugo
F-92200 Neuilly-sur-Seine (FR)**

(72) Inventeur : **Perceau, Michel
7 Rue Linne
F-25200 Montbeliard (FR)**

(74) Mandataire : **Moncheny, Michel et al
c/o Cabinet Lavoix 2 Place d'Estienne d'Orves
F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention est relative aux paliers élastiques travaillant en torsion, en particulier pour barre anti-dévers de véhicule automobile, du type comprenant deux blocs en matériau élastomère présentant chacun un évidement intérieur semi-cylindrique et symétriquement enserrés autour d'une barre ou autre pièce cylindrique par deux pièces extérieures reliées par des moyens de serrage, de manière qu'une rotation de la barre par rapport aux deux pièces extérieures provoque une déformation élastique des deux blocs. L'invention s'applique en particulier à l'articulation d'une barre anti-dévers sur la structure d'un véhicule automobile.

Les paliers de ce type, travaillant en torsion, présentent l'avantage de ne pas comporter de pièces frottantes sujettes à usure, génératrices de bruit et vulnérables par corrosion. Ils réalisent un accouplement élastique entre la barre et les pièces extérieures. Pour éviter tout glissement entre les blocs élastiques et la barre, deux demi-bagues intérieures rigides sont de préférence interposées sur ces éléments et en sont rendues solidaires, au moins en rotation, notamment par frottement contre la barre et par adhérisation aux blocs dans les évidements de ceux-ci.

Dans les paliers connus du type précité (FR-A-2 342 425), les blocs sont habituellement des demi-manchons annulaires dont le contour extérieur est cylindrique et porte, généralement par l'intermédiaire de demi-bagues extérieures adhérisées, contre un contour intérieur de forme complémentaire des deux pièces extérieures, par exemple constituées l'une par un support et l'autre par une bride et reliées par des vis.

Une telle forme annulaire de l'ensemble des deux blocs rend préférable l'interposition de demi-bagues extérieures adhérisées à ces blocs, pour éviter un glissement de ceux-ci dans les pièces extérieures, qui provoquerait à la longue leur détérioration. Par ailleurs, lors des mouvements de rotation de la barre par rapport aux pièces extérieures, les blocs, en se déformant, sont soumis à des contraintes de cisaillement qui s'ajoutent aux précontraintes dues au serrage des blocs entre les pièces extérieures, ce qui réduit leur durée de vie.

L'invention a pour but de remédier à ces inconvénients en réalisant un palier élastique travaillant en torsion qui soit simple et endurant.

Par rapport au FR-A-2 342 425 qui décrit déjà un palier élastique en torsion, en particulier pour barre anti-dévers de véhicule automobile, du type comprenant deux blocs en matériau élastomère présentant chacun dans leurs faces en regard perpendiculaires à un plan médian de référence P, un évidement semi-cylindrique, ces deux blocs étant disposés symétriquement de part et d'autre d'une barre ou autre pièce cylindrique engagée dans chaque évidement et étant serrés entre deux pièces extérieures par des moyens de serrage parallèles au plan P et perpendiculaires à la barre ou à ladite autre pièce, de manière qu'une rotation de la barre par rapport aux deux pièces extérieures provoque une déformation élastique des deux blocs, l'invention est caractérisée en ce que les blocs sont de forme parallélépipédique et comportent, de part et d'autre de la barre et du plan médian P, des extensions latérales qui, à l'état libre, s'élargissent suivant une direction parallèle au plan P en s'éloignant de la barre et qui sont seules comprimées entre les pièces extérieures du palier.

Suivant quelques caractéristiques avantageuses de l'invention :
— la face de chaque bloc opposée à l'autre bloc comporte avant assemblage un évidement central évasé parallèle à la barre et prend appui contre une face plane intérieure d'une des deux pièces extérieures ;
— les deux pièces extérieures sont reliées par des vis qui traversent respectivement, au moins partiellement, les extensions des deux blocs ;
— les deux pièces extérieures enserrent, de part et d'autre de la barre, deux entretoises limitant la compression des extensions des blocs ;
— chaque entretoise entoure une des vis et comporte des rebords enveloppant l'extension associée.

Un exemple de réalisation d'un palier selon l'invention est décrit ci-après, avec référence au dessin annexé, sur lequel :

la Figure 1 est une vue en coupe transversale d'un palier suivant l'invention, la coupe étant prise suivant la ligne 1-1 de la Fig. 2 ;

la Figure 2 en est une vue de dessus ;

la Figure 3 est une vue en élévation d'une pièce du palier, prise dans la même direction que la Fig. 1 ; et

la Figure 4 est une vue de dessus de l'objet de la Fig. 3.

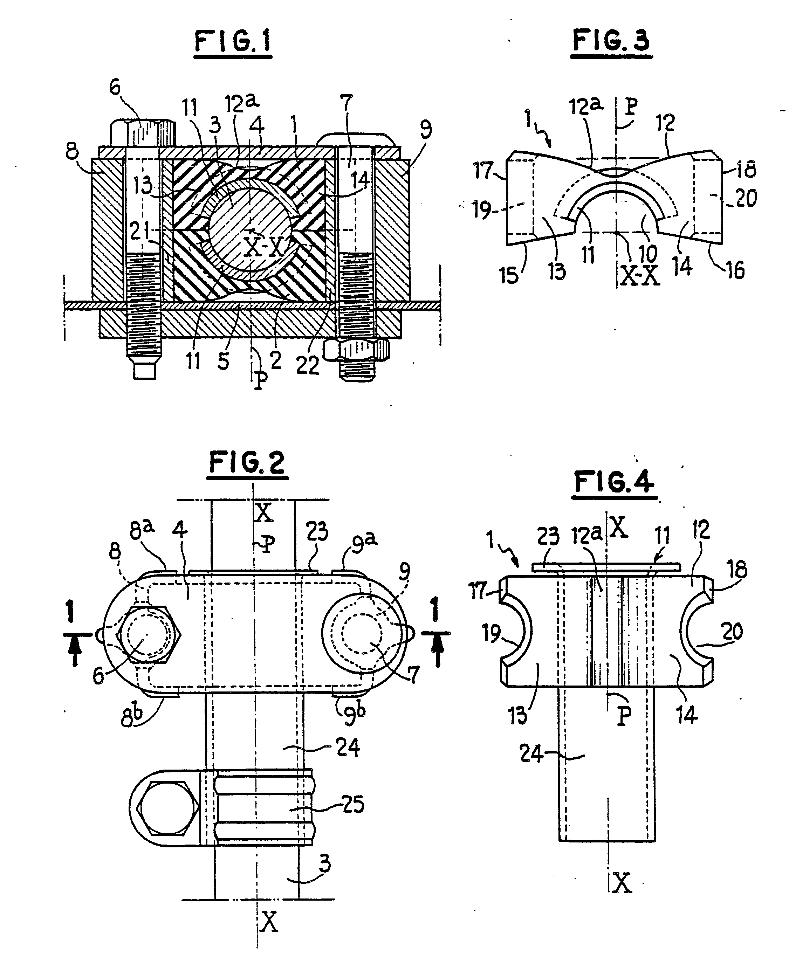

On voit sur les Fig. 1 et 2 un palier comprenant deux blocs symétriques 1, 2 en matériau élastomère, symétriquement enserrés de part et d'autre d'une barre 3 par deux pièces extérieures plates 4, 5 reliées par deux vis ou boulons 6, 7 perpendiculaires à la barre et traversant deux entretoises respectives 8, 9. Pour la commodité de la description, on supposera que l'axe X-X de la barre 3 est horizontal et que les blocs 1 et 2 sont situés l'un au-dessus, l'autre au-dessous de cette barre.

Chaque bloc 1, 2, à l'état libre, est de forme générale parallélépipédique symétrique par rapport à un plan vertical P. On décrira ci-dessous le bloc supérieur 1 à l'état libre en se référant aux Fig. 3 et 4.

La grande face inférieure du bloc 1, tournée vers la barre et vers l'autre bloc, comporte un évidement semi-cylindrique 10 au fond duquel est adhérisée une demi-bague intérieure 11. La face 12 de chaque bloc opposée à l'autre bloc comporte un évidement central évasé 12$^a$ parallèle à la barre. Le bloc est prolongé de chaque côté de la barre par une extension 13, 14 qui s'élargit en s'éloignant de la barre, au moins à l'état libre. Chaque extension est définie inférieurement par une face d'appui 15, 16 qui s'étend légèrement vers le bas à partir du bord correspondant de l'évidement 10, et supérieurement par la face de serrage 12, qui s'évase jusqu'à chacun de ses bords latéraux. Chaque extension 13, 14 présente en outre une face latérale 17, 18 à peu près verticale et parallèle au plan P pourvue d'un embrèvement semi-cylindrique 19, 20 d'axe vertical.

Chaque embrèvement 19, 20 reçoit la partie tubulaire 21, 22 d'une des entretoises 8, 9, cette partie tubulaire entourant la vis 6, 7 correspondante. Sur chaque partie tubulaire 21, 22 font saillie deux rebords coudés verticaux 8ᵃ, 8ᵇ, 9ᵃ, 9ᵇ enveloppant l'extension 13, 14 associée.

Chaque demi-bague intérieure 11 est munie d'un côté d'une collerette 23 adjacente à une extrémité des blocs 1 et 2 et de l'autre côté d'un prolongement 24, extérieur aux blocs 1 et 2, qui est serré contre la barre 3 par un collier à vis 25.

Lors du montage du palier, les deux blocs 1, 2 sont serrés l'un contre l'autre et contre la barre 3, par compression des extensions 13, 14 entre les faces intérieures planes des pièces extérieures 4, 5. Cette compression, limitée par les entretoises 8, 9, provoque l'aplatissement des faces d'appui 15, 16 tournées l'une vers l'autre des deux blocs et l'amincissement de l'évidement 12ᵃ de chaque face 12. Les demi-bagues 11 étant serrées contre la barre 3 par la compression des blocs 1, 2 et par serrage du collier 25, elles sont solidaires non seulement des blocs par adhérisation, mais aussi de la barre par frottement.

En service, quand la barre 3 est sollicitée en rotation par rapport aux pièces extérieures 4, 5, les blocs 1 et 2 se déforment principalement au voisinage de la barre, notamment à proximité des évidements 12ᵃ, c'est-à-dire dans des zones qui ne sont pas soumises aux contraintes de compression dues au serrage des vis 6, 7.

Le palier élastique suivant l'invention évite ainsi le cumul des contraintes de compression et de torsion des blocs, et, par suite, s'avère particulièrement endurant. Il convient notamment pour articuler une barre anti-dévers de véhicule automobile sur la structure du véhicule, comme indiqué plus haut.

Le prix de revient du palier élastique est par ailleurs relativement peu élevé grâce à la simplicité des pièces extérieures, plates, et à l'absence de bagues extérieures adhérisées, nécessaires dans les paliers annulaires classiques de même type.

## Revendications

1. Palier élastique travaillant en torsion, en particulier pour barre anti-dévers de véhicule automobile, du type comprenant deux blocs (1, 2) en matériau élastomère présentant chacun dans leurs faces en regard perpendiculaires à un plan médian de référence P, un évidement (10) semi-cylindrique, ces deux blocs étant disposés symétriquement de part et d'autre d'une barre (3) ou autre pièce cylindrique engagée dans chaque évidement (10) et étant serrés entre deux pièces extérieures (4, 5) par des moyens de serrage (6, 7) parallèles au plan P et perpendiculaires à la barre (3) ou à ladite autre pièce, de manière qu'une rotation de la barre par rapport aux deux pièces extérieures provoque une déformation élastique des deux blocs, caractérisé en ce que les blocs (1, 2) sont de forme parallélépipédique et comportent, de part et d'autre de la barre (3) et du plan médian P, des extensions latérales (13, 14) qui, à l'état libre, s'élargissent suivant une direction parallèle au plan P en s'éloignant de la barre et qui sont seules comprimées entre les pièces extérieures (4, 5) du palier.

2. Palier élastique suivant la revendication 1, caractérisé en ce que la face (12) de chaque bloc (1, 2) opposée à l'autre bloc comporte avant assemblage un évidement central évasé (12ᵃ) parallèle à la barre (3) et prend appui contre une face plane intérieure d'une des deux pièces extérieures (4, 5).

3. Palier élastique suivant l'une des revendications 1 et 2, caractérisé en ce que les deux pièces extérieures (4, 5) sont reliées par des vis (6, 7) qui traversent respectivement, au moins partiellement, les extensions (13, 14) des deux blocs.

4. Palier élastique suivant l'une quelconque des revendications 1 à 3, caractérisé en ce que les deux pièces extérieures (4, 5) enserrent, de part et d'autre de la barre (3), deux entretoises (8, 9) limitant la compression des extensions (13, 14) des blocs (1, 2).

5. Palier élastique suivant les revendications 3 et 4 prises ensemble, caractérisé en ce que chaque entretoise (8, 9) entoure une des vis (6, 7) et comporte des rebords (8ᵃ, 8ᵇ, 9ᵃ, 9ᵇ) enveloppant l'extension (13, 14) associée.

## Claims

1. A resiliently yieldable bearing operating under torsional stress, in particular for an anti-roll bar for a motor vehicle, of the type comprising two blocks (1, 2) of an elastomer material each having in their confronting sides perpendicular to a median reference plane P, a semi-cylindrical cavity (10), these two blocks being disposed symmetrically on each side of a bar (3) or other cylindrical member engaged in each cavity (10) and being clamped between to outer elements (4, 5) by clamping means (6, 7) parallel to the plane P and perpendicular to the bar (3) or to said other member, so that a rotation of the bar with respect to the two outer elements produces an elastic deformation of the two blocks, characterized in that the blocks (1, 2) have the shape of a parallelepiped and include, on each side of the bar (3) and of the median plane P, lateral extensions (13, 14) which, in the free state, diverge in a direction parallel to the plane P away from the bar and which are alone compressed between the outer elements (4, 5) of the bearing.

2. A resiliently yieldable bearing according to claim 1, characterized in that the side (12) of each block (1, 2) opposed to the other block has a divergent central recess (12a) parallel to the bar (3) and bears against an inner planar side of one of the two outer elements (4, 5).

3. A resiliently yieldable bearing according to claim 1 or 2, characterized in that the two outer elements (4, 5) are connected by screws (6, 7) which respectively extend, at least partly, through the extensions (13, 14) of the two blocks.

4. A resiliently yieldable bearing according to any one of the claims 1 to 3, characterized in that the two outer elements (4, 5) grip, on each side of the bar (3) two spacer members (8, 9) which limit the compression of the extensions (13, 14) of the blocks (1, 2).

5. A resilient yieldable bearing according to claims 3 and 4 taken together, characterized in that each spacer member (8, 9) surrounds one of the screws (6, 7) and includes flanges (8a, 8b, 9a, 9b) which surround the associated extension (13, 14).

**Patentansprüche**

1. Elastisches Lager auf Verdrehung belastet, insbesondere für Kraftfahrzeugdrehstab mit zwei Blöcken (1, 2) aus elastomerem Material, die in ihren einander gegenüberliegenden, senkrecht zu einer medianen Bezugsebene (P) gerichteten Seitenflächen jeweils eine halbzylindrische Aussparung (10) aufweisen, wobei diese beiden Blöcke symmetrisch beidseits eines in jede Aussparung (10) eingelegten Stabes (3) oder anderen zylindrischen Teils angeordnet und durch parallel zur Ebene (P) und senkrecht zum Stab (3) oder anderen zylindrischen Teil verlaufende Spannmittel (6, 7) zwischen zwei Außenteile (4, 5) eingespannt sind, derart, daß eine Verdrehung des Stabes bezüglich der beiden Außenteile eine elastische Verformung der beiden Blöcke hervorruft, dadurch gekennzeichnet, daß die Blöcke (1, 2) von parallelepitetischer Form sind und beidseits des Stabes (3) und der medianen Ebene (P) seitliche Erweiterungen (13, 14) umfassen, die sich im freien Zustand mit zunehmender Entfernung vom Stab entlang einer parallel zur Ebene (P) verlaufenden Richtung verbreitern und allein zwischen den Außenteilen (4, 5) des Lagers zusammengedrückt werden.

2. Elastisches Lager nach Anspruch 1, dadurch gekennzeichnet, daß die dem anderen Block abgekehrte Seitenfläche (12) jedes Blocks (1, 2) vor dem Zusammenbau eine zentrale, parallel zum Stab (3) ausgesparte Ausnehmung (12a) umfaßt und sich gegen eine ebene Innenseite eines der beiden Außenteile (4, 5) abstützt.

3. Elastisches Lager nach einem der Ansprüche 1 und 2, dadurch gekennzeichnet, daß die beiden Außenteile (4, 5) durch Schrauben (6, 7) verbunden sind, die jeweils zumindest partiell die Erweiterungen (13, 14) der beiden Blöcke durchdringen.

4. Elastisches Lager nach einem der Ansprüche 1 bis 3, dadurch gekennzeichnet, daß die beiden außenteile (4, 5) beidseits des Stabes (3) zwei Distanzrohre (8, 9) zwischen sich einschließen, welche die Kompression der Erweiterungen (13, 14) der Blöcke (1, 2) begrenzen.

5. Elastisches Lager nach den Ansprüchen 3 und 4, dadurch gekennzeichnet, daß jedes Distanzrohr (8, 9) eine der Schrauben (6, 7) umgibt und Randumschläge (8a, 8b, 9a, 9b) umfaßt, welche die zugeordnete Erweiterung (13,14) umhüllen.

FIG.1

FIG.3

FIG.2

FIG.4